Europäisches Patentamt

European Patent Office

Office européen des brevets

(19)

(11) EP 0 517 137 B1

# (12) EUROPEAN PATENT SPECIFICATION

(45) Date of publication and mention
of the grant of the patent:
**08.12.1999 Bulletin 1999/49**

(51) Int Cl.⁶: **G11B 5/187**, G11B 5/31,
G11B 5/39, G11B 5/012,
G11B 5/02, G11B 5/596

(21) Application number: **92109188.0**

(22) Date of filing: **01.06.1992**

(54) **Magnetic recording head capable of defining narrow track width and magnetic recording apparatus using the same**

Magnetaufzeichnungskopf geeignet zur Definierung von schmaler Spurbreite und
Magnetaufzeichnungsgerät für dessen Verwendung

Tête d'enregistrement magnétique capable de définir une piste étroite et appareil d'enregistrement
magnétique l'utilisant

(84) Designated Contracting States:
**DE FR**

(30) Priority: **03.06.1991 JP 13097891**

(43) Date of publication of application:
**09.12.1992 Bulletin 1992/50**

(73) Proprietor: **Hitachi, Ltd.**
**Chiyoda-ku, Tokyo 101 (JP)**

(72) Inventors:
• **Suzuki, Hiroshi**
**Kokubunji-shi (JP)**
• **Todokoro, Hideo**
**Nishitama-gun, Tokyo (JP)**
• **Takano, Hisashi**
**No. 307 St. Paul, MN 55113 (JP)**

• **Shinada, Hiroyuki**
**Chofu-shi (JP)**

(74) Representative: **Strehl Schübel-Hopf & Partner**
**Maximilianstrasse 54**
**80538 München (DE)**

(56) References cited:
**EP-A- 0 404 332          DE-A- 4 020 206**

• **PATENT ABSTRACTS OF JAPAN vol. 14, no. 353
(P-1086)31 July 1990 & JP-A-21 28 313
( MATSUSHITA LTD ) 16 May 1990**
• **PATENT ABSTRACTS OF JAPAN vol. 13, no. 89
(P-836)2 March 1989 & JP-A-63 271 708
( HITACHI LTD ) 9 November 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The present invention relates to a magnetic head for use in an information recording apparatus utilizing a magnetic recording method, and more particularly to a magnetic head capable of reducing the track width and making magnetic recording for a magnetic medium at a high recording density.

In order to attain high density recording and large capacity recording in magnetic recording, it is necessary to make narrow the track width defined by a magnetic head. Further, the coercivity of a recording medium has been increased in accordance with the high density recording and the large capacity recording. Thus, the magnetic head is required to define a narrow track width and moreover to generate a strong magnetic field capable of magnetizing the magnetic recording medium.

As a method of reducing the track width defined by a magnetic head, processes such as sputtering and ion-milling are used for making small dimensions of the magnetic head corresponding to the track width. According to this method, however, a magnetic path at the tip of a magnetic pole has a narrow cross section, and thus the magnetization of the magnetic pole is first saturated at the tip. Accordingly, the magnetic pole cannot generate a strong magnetic field capable of magnetizing the recording medium. In order to solve this problem, the thickness of the magnetic pole in a longitudinal recording direction is increased, and thus the magnetic saturation at the tip of the magnetic pole can be suppressed.

In order to make a magnetic head correspond to a desired track width in manufacturing processes, ion-beam etching using a carbon fluoride gas is carried out for, for example, an aluminum oxide ($A\ell_2O_3$) film. That is, dimensions of the magnetic head corresponding to the track width are determined by the alumina masking method (refer to JP-A-60-37130). Further, in order to obtain a magnetic head which has a thick magnetic pole, can define the width of a recording track accurately, and generates a strong magnetic field capable of magnetizing a high-coercivity recording medium, a method of manufacturing a magnetic head has been proposed in which an upper pole is divided into two parts (refer to, for example, JP-A-63-281209).

Further, a method of making small dimensions of a magnetic head corresponding to a track width, by stepping the tip of a magnetic pole after the air bearing surface of the magnetic head has been polished, is described in, for example, an article by J. Kishigami et. al. (IEEE Trans. Magn., Vol. 24, No. 6, pp. 2841-2843, Nov. 1988). In this article, the tip of the magnetic pole is stepped by the ion-milling method using a photoresist layer as a masking film.

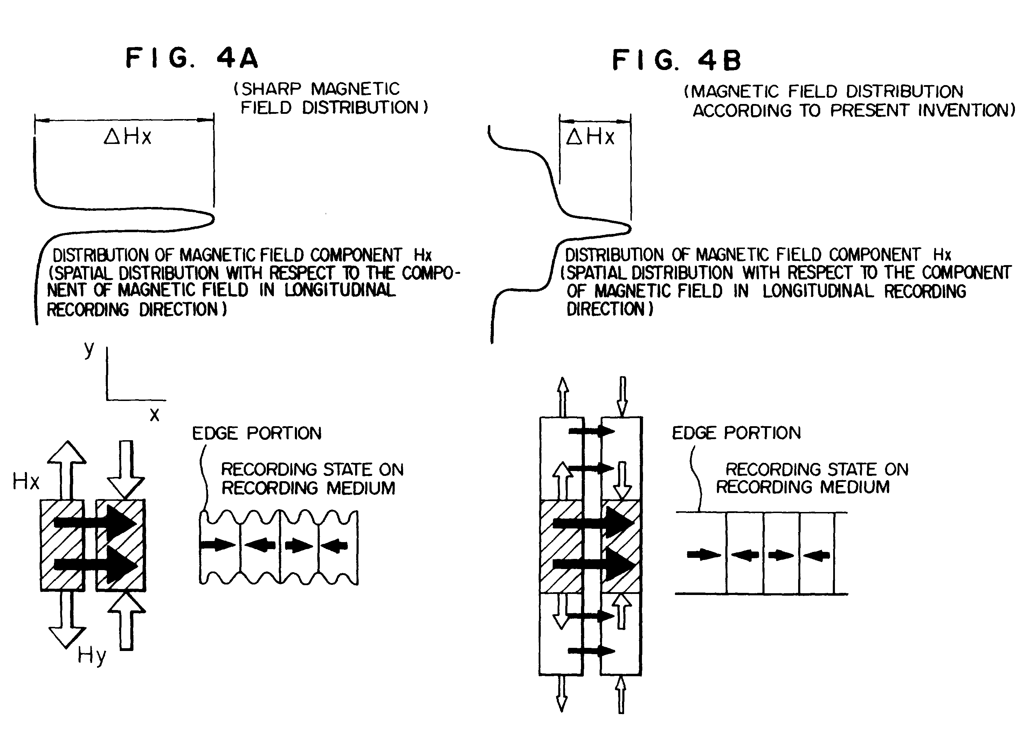

IEEE Transactions on Magnetics, November 1988, Vol. 24, No. 6, pages 2841 to 2843 discloses in Figure 4 a magnetic head according to the preamble of claim 1 and having a longitudinal directional magnetic field distribution with a track width of 2.2 μm. The track width is about twice the desired width of a magnetic head. According to this reference, etching is merely used to obtain a small width of the recording track of a magnetic head. The resulting main magnetic field distribution therefore becomes narrower. Consequently, although a peripheral magnetic field distribution appears with the main magnetic field distribution as shown in Figure 4 of this document, the track width is limited to 2.2 μm. If etching is to be executed to further narrow the track width, the peak magnetic field intensity is reduced to values below the coercivity of the recording medium which makes recording impossible.

SUMMARY OF THE INVENTION

According to the above-described prior art methods, dimensions of a magnetic head corresponding to a track width are made 2.2 to 5 μm at best. Further, when the above dimensions of the magnetic head are to be further reduced, a magnetic path is obliged to have a narrow cross section at the tip of a magnetic pole, and thus the magnetic head cannot generate a strong magnetic field capable of magnetizing a high-coercivity recording medium.

The prior U.S. application Ser. No. 07/683719 (corresponding to EP-A-0 452 846) discloses a method of fabricating a magnetic head capable of defining a narrow track width, and the characteristics and effects of the magnetic head, but fails to disclose a magnetic field generated by the magnetic head. On the other hand, the present application discloses the characteristics and effects of a magnetic field generated by the above magnetic head capable of defining the narrow track width, and the structure of the magnetic head for producing the magnetic field characteristics.

The objects are accomplished by a magnetic head according to claim 1, and the fabricating method of claim 10. Claim 19 discloses a magnetic disk storage including a magnetic head of claim 1. Claim 24 relates to a magnetic tape storage comprising a head according to claim 1.

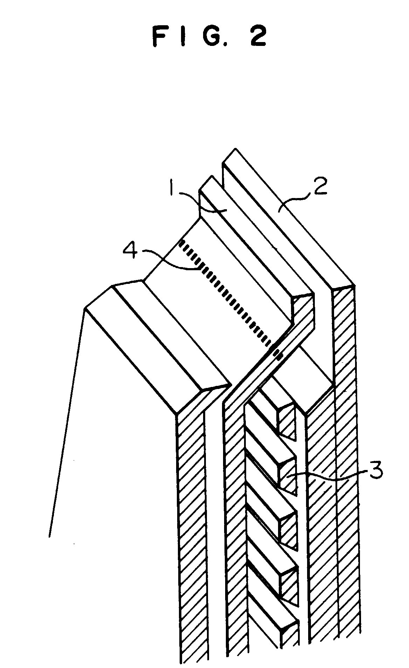

Fig. 2 is a schematic diagram showing a cross section of a conventional, thin-film magnetic head. Referring to Fig. 2, an upper pole 1 and a lower pole 2 are both formed of a magnetic film, to make a magnetic circuit. Each of the upper pole 1 and the lower pole 2 is formed of a mono-layer film which is made of a magnetic material high in saturated magnetic flux density such as permalloy (that is, Ni-Fe alloy), or a multilayer film which has a structure that an insulating layer such as an aluminum oxide layer is sandwiched between adjacent permalloy layers. Further, a coil 3 is made of, for example, aluminum (Aℓ), copper (Cu), chromium (Cr), or others.

When a current is caused to flow through the coil 3, a magnetic flux corresponding to the current passes through a magnetic circuit made up of the upper pole 1 and the lower pole 2. The magnetic flux passing through the magnetic circuit is first saturated at a place 4 where the upper and lower poles have a minimum cross section, and a magnetic flux greater than the saturated magnetic flux cannot pass through the place 4. Accordingly, a magnetic field generated at the tips of the poles 1 and 2 for performing a recording operation, cannot be made stronger than a magnetic field corresponding to the above saturated magnetic flux.

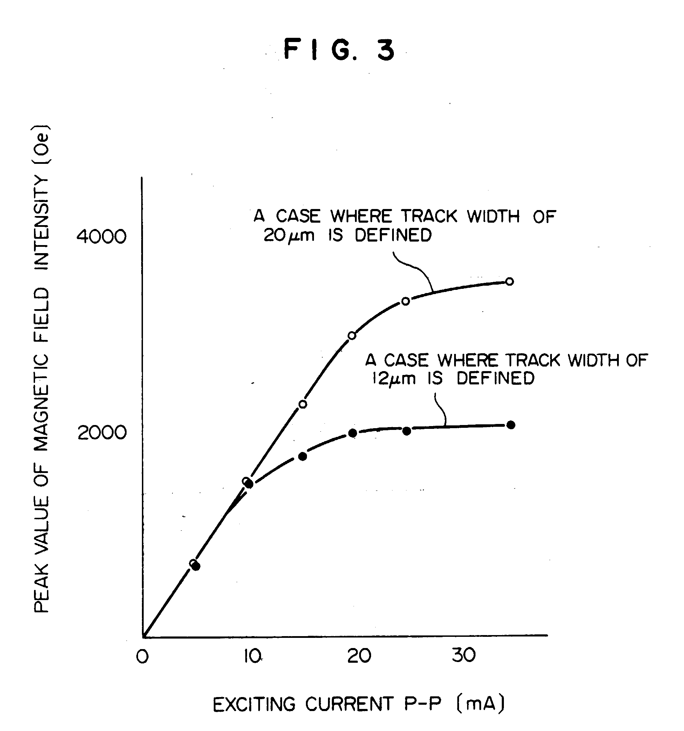

Fig. 3 is a graph showing examples of a relation between an exciting current and the peak value of longitudinal magnetic field (that is, a component in a longitudinal recording direction of a magnetic field generated by a magnetic head). In Fig. 3, it is to be noted that a driving frequency of 10 MHz is used, and the measurement of longitudinal magnetic field is made at a position which is spaced apart from the tip of each magnetic pole a distance of 1 μm. As is apparent from Fig. 3, it is impossible to increase the peak value of longitudinal magnetic field in proportion to the exciting current, because the magnetic path made up of the upper and lower poles 1 and 2 is put in the state of magnetic saturation. Further, a minimum exciting current corresponding to the magnetic saturation of the magnetic path decreases as dimensions of a magnetic head corresponding to a track width are smaller, that is, the cross section of each magnetic pole is smaller.

As can be seen from the above, when a narrow recording track is formed only by making magnetic poles of a magnetic head small in size, the magnetic head cannot generate a strong magnetic field for magnetizing a magnetic recording medium.

A gist of the present invention resides in that a magnetic field weaker than the coercivity of a recording medium is formed beside or around magnetic poles for defining a narrow track width, to reinforce a longitudinal magnetic field which has been weakened by reducing the cross section of each of the magnetic poles, thereby making only a magnetic field for defining the narrow track width stronger than the coercivity of the recording medium. The present invention can be realized by the following methods. ① That area of the pole face of each magnetic pole which exists on one side or both sides of an area for defining a predetermined track width, is etched so that only the area for defining the track width is kept unetched. That is, the distance between the surface area existing beside the track-width defining area and the air bearing surface of a magnetic head for a recording medium, is made greater than the distance between the track-width defining area and the air bearing surface. ② That portion of each magnetic pole which is formed on one side or both sides of a basic portion for defining a predetermined track width, is made of at least one magnetic material which is smaller in saturated magnetic flux density than a magnetic material for making the basic portion. ③ A pair of additional magnetic poles are disposed beside a magnetic path which generates a magnetic field for defining a small track width, or disposed so that magnetic poles for defining the narrow track width and the additional magnetic poles are arranged along a longitudinal direction, to reinforce the magnetic field for defining the narrow track width with a magnetic field generated by the additional magnetic poles.

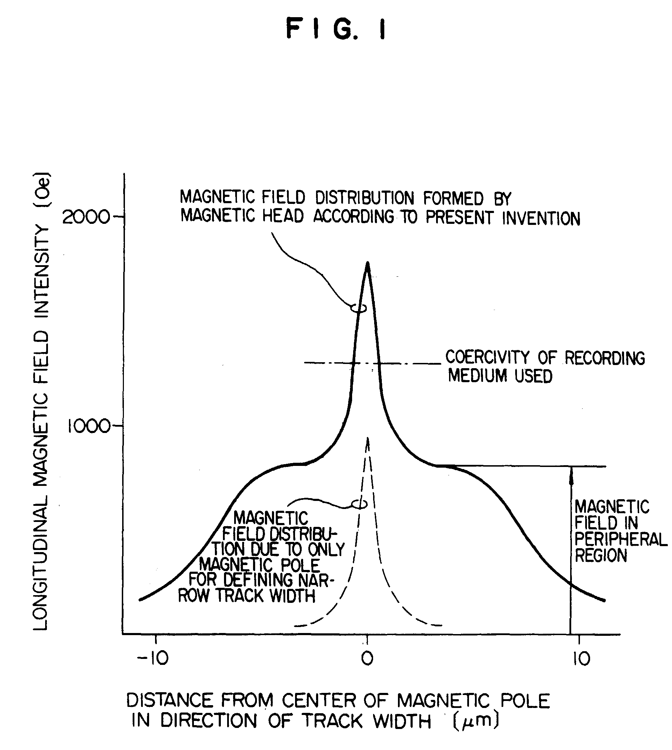

Owing to the above structure of a magnetic head according to the present invention, the longitudinal magnetic field distribution formed by the magnetic head is given by a combination of a principal region having the strongest magnetic field for defining a narrow track width, and a region having a weak magnetic field and formed besides or around the principal region. Thus, a magnetic field which has been weakened by reducing dimensions of the magnetic head corresponding to a track width, is increased by a magnetic field which is formed beside or around the principal region and is weaker than the coercivity of a recording medium. Thus, only a magnetic field for defining a narrow track width can be made stronger than the coercivity of the recording medium. Fig. 1 shows an example of the spatial distribution of the longitudinal magnetic field generated by the above structure, in the direction of track width. As shown in Fig. 1, a magnetic field distribution which is indicated by a broken curve and is based upon only magnetic poles for defining a narrow track width, is reinforced with an additional magnetic field which is generated beside or around the magnetic poles. Thus, a combined magnetic field is stronger than the coercivity of a recording medium only at the magnetic poles. That is, magnetic recording for a high-coercivity recording medium becomes possible, such magnetic recording is impossible in a case where a structure that the cross section of each magnetic pole is merely reduced, is used.

Now, let us assume that a magnetic head for defining a narrow track width generates magnetic field distribution where a steep slope is formed at both ends of a principal region, and which is devoid of a weak magnetic field (that is, background magnetic field) spread beside or around the principal region. This magnetic field distribution is inferior to the magnetic field distribution formed by a magnetic head according to the present invention. The reason for this will be explained below, with reference to Figs. 4A and 4B. It is to be noted that, in Figs. 4A and 4B, an x-direction indicates a longitudinal recording direction, and a y-direction indicates the direction of track width. In a case where a longitudinal magnetic field (that is, x-magnetic field component) has a sharp peak as shown in Fig. 4A, a y-magnetic field component which has a sharp peak corresponding to the sharp peak of the longitudinal magnetic field, is concentrated on the side edges of each magnetic pole on the basis of the continuity of magnetic line of force. The intensity of the y-magnetic field component is proportional to the height $\Delta H_x$ of the x-magnetic field component between a base and a peak. this y-magnetic field component is concentrated on both edges of a recording track, and thus the magnetization of the edges of the recording track is disturbed as shown in Fig. 4A. When a reproducing operation is performed for the recording track, the above magnetic disturbance will generate noise. While, in a case where the longitudinal magnetic field (namely, x-magnetic field component) has distribution shown in Fig. 4B, a magnetic field $H_x$ is given by the combination of a peripheral background magnetic field and a central magnetic field for defining a small track width, and thus can have a large value. Since the peripheral magnetic field does not have a y-component, the y-magnetic field component is independent of the peripheral magnetic field, and depends upon only a height $\Delta H_x$ between a background value and a peak value. Since the height $\Delta H_x$ is small, the y-magnetic field component concentrated on both edges of a recording track is far weaker than that of Fig. 4A. Accordingly, the recording state at the edges of the recording track is scarcely disturbed by the y-magnetic field component. Thus, noise generated in a reproducing period is reduced in a great degree.

BRIEF DESCRIPTION OF THE DRAWINGS

Fig. 1 is a graph showing the longitudinal magnetic field distribution along the direction of track width according to the present invention.
Fig. 2 is a schematic diagram for explaining a cross-sectional structure of a conventional, thin-film magnetic head for forming a magnetic circuit.
Fig. 3 is a graph showing relations between an exciting current and the peak value of recording magnetic field.
Figs. 4A and 4B are diagrams for explaining that the y-component of a magnetic field generated by a magnetic head is weakened by the present invention.
Fig. 5 is a schematic diagram for explaining the structure of a thin-film magnetic head according to the first embodiment of the present invention, and corresponds to Fig. 1 of the prior U.S. application.
Fig. 6 is a schematic diagram for explaining the structure of the air bearing surface of the thin-film magnetic head of Fig. 5.
Fig. 7 is a graph showing the longitudinal magnetic field distribution along the direction of track width in both of a case where a pole face is not etched by an ion beam, and a case where edge portions of the pole face are etched by the ion beam.
Fig. 8A is a diagram showing a read/write magnetic head according to the present invention.
Fig. 8B is a diagram showing another read/write magnetic head according to the present invention, and corresponds to Fig. 12 of the prior U.S. application.
Fig. 9 is a graph for explaining characteristics of a magnetic recording medium.
Fig. 10 is a graph showing relations between the etching depth for a magnetic pole and the magnetic field generated by a magnetic head.
Fig. 11 is a graph showing relations between that surface area of a magnetic pole which is exposed to an air bearing surface, and the etching depth for the magnetic pole.
Fig. 12 is a diagram showing a cross section of a magnetic head according to the fifth embodiment of the present invention.
Fig. 13 is a schematic diagram for explaining the structure of the tip of the magnetic pole portion of a magnetic head according to the sixth embodiment of the present invention.
Fig. 14 is a schematic diagram for explaining the seventh embodiment of the present invention.
Fig. 15 is a diagram showing a whole construction of a magnetic disk storage.

DESCRIPTION OF THE PREFERRED EMBODIMENTS

EMBODIMENT-1

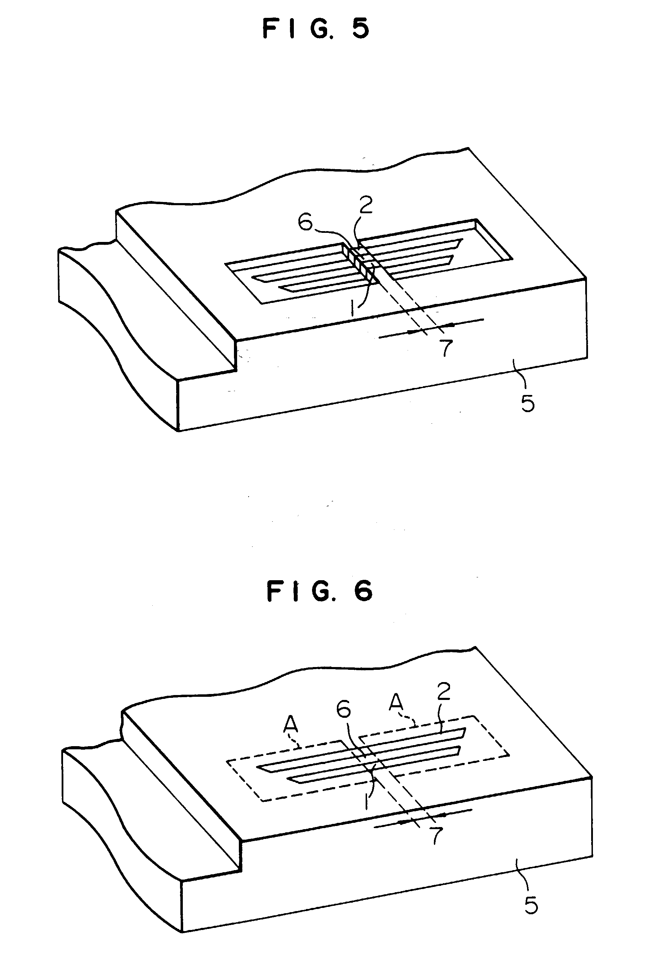

An embodiment of the present invention will be explained below, with reference to the drawings. Fig. 5 shows the structure of a magnetic head of a kind according to the present invention, viewed from an air bearing surface, and corresponds to Fig. 1 of the prior U.S. application. The magnetic head is fabricated in such a manner that that portion of the air bearing surface of the thin-film magnetic head of Fig. 6 which is indicated by reference character A, is selectively etched by a focused ion beam. In Fig. 5, reference numeral 1 designates an upper pole, and 2 a lower pole. These poles 1 and 2 are exposed to an air bearing surface. Further, reference numeral 5 designates a sliding substrate, and 6 the gap between the upper pole and the lower pole.
In this magnetic head, surface portions which exist on both sides of a portion 7 corresponding to a small track width, are etched to a predetermined depth by a focused ion beam from the air bearing surface side so that the portion 7 is left unetched. Thus, a difference in level is formed at the tip of the magnetic head. Although a structure that surface portions existing on both sides of the portion 7 are etched, is shown in Fig. 5, the magnetic head according to the present embodiment is not limited to such a symmetrical structure.

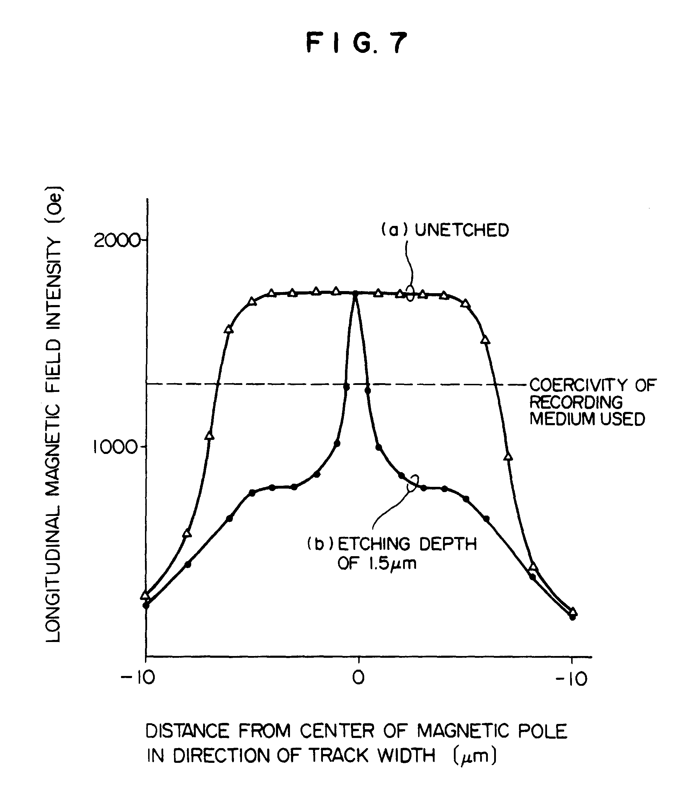

Fig. 7 shows example of magnetic field distribution which is formed by the above magnetic head and is actually measured. In Fig. 7, a curve (a) indicates longitudinal magnetic field distribution along the direction of track width measured before the tip of the magnetic head is etched, and a curve (b) indicates longitudinal magnetic field distribution along the direction of track width measured after the tip of the magnetic head has been selectively etched to a depth of 1.5 μm. The measurement of magnetic field distribution was made by the electron beam computerized tomography method using the Lorentz effect. The longitudinal magnetic field distribution formed by the magnetic head having been etched, has a sharp peak at a central region. The value of the peak is equal to the magnetic field obtained at a time when the tip of the magnetic head is not yet etched, and a magnetic field on both sides of the peak is about one half the peak value. The width of the peak is nearly equal to the width (1 μm) of the unetched portion (of a pole face) for defining a small track width. Since a recording medium having a coercivity of 1,300 Oe is used, the above magnetic head can write information on a narrow recording track of the recording medium. That is, the magnetic head can perform a recording operation for a narrow recording track having a width 1.2 μm or less.

In the present embodiment, the magnetic head is etched by a focused ion beam. Alternatively, the magnetic head may be etched by using usual photolithographic processes. That is, in the manufacturing process of a magnetic head, a difference in level may be formed at the tip of each magnetic pole by sputtering or ion milling. The magnetic head thus obtained can exhibit the same effect as that of the magnetic head according to the present embodiment.

Further, a bottom surface due to the etching is not always required to be parallel to the air bearing surface, but may be inclined to the air bearing surface in the direction of track width or in a longitudinal recording direction.

In order to eliminate a difference in level at the tip of the magnetic head and to make the tip of the magnetic head flat, an etched surface portion is filled with a non-magnetic material, and the pole face thus obtained is polished. A magnetic head having been subjected to such processing is suitable for use in magnetic disk storage. Alternatively, the etched surface portion may be filled with a magnetic material which is lower in saturated magnetic flux density than a magnetic material for making a main magnetic circuit. A magnetic head fabricated in the above-manner can produce the same magnetic field distribution as that formed by a magnetic head in which the etched surface portion is filled with a non-magnetic material.


EMBODIMENT-2


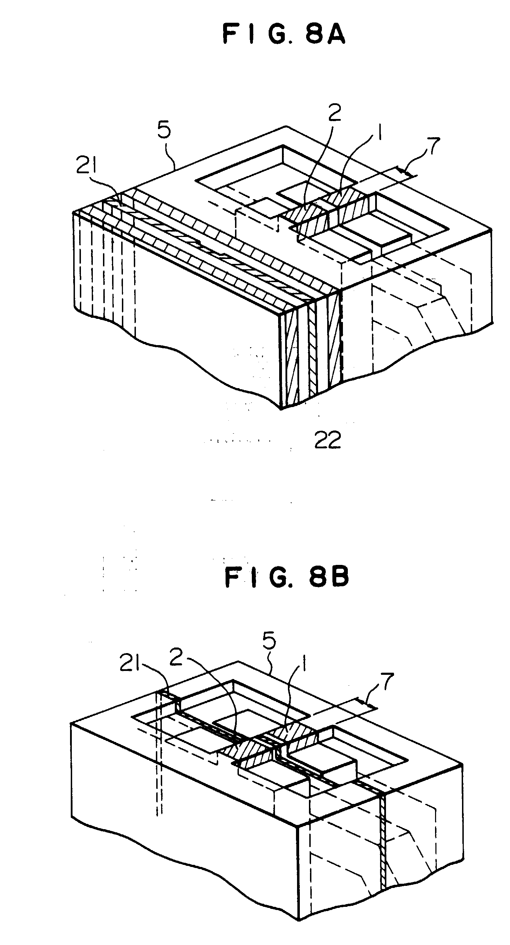

A magnetoresistive sensor was disposed in the neighborhood of the lower pole of the magnetic head mentioned in the EMBODIMENT-1, to form a read/write magnetic head. Fig. 8A shows the structure of this read/write magnetic head. As shown in Fig. 8A, a magnetoresistive sensor 21 sandwiched between shielding layers 22 is disposed in the neighborhood of the lower pole. The shielding layers 22 are made of a magnetic material. Two magnetic heads having the above structure were fabricated. In these magnetic heads, a main magnetic field for defining a small track width was made stronger than the coercivity of a recording medium. In one of the magnetic heads, a peripheral magnetic field formed on both sides of the main magnetic field was made stronger than the anisotropy field of the magnetoresistive sensor 21. In the other magnetic head, the peripheral magnetic field was weaker than the above anisotropy field. The magnetic field distribution formed by each of the magnetic heads was determined by the electron beam computerized tomography method using the Lorentz effect. the reproducing characteristics of these magnetic heads were compared. The magnetic head which generates a peripheral magnetic field stronger than the anisotropy field of the magnetoresistive sensor 21, can generate a reproduced signal which is low in noise level. The reason for this is as follows. Since the peripheral magnetic field is stronger than the anisotropy field of the magnetoresistive sensor 21, magnetic domains in the magnetoresistive sensor 21 are oriented in the same direction all over the region extending from a central portion of the sensor 21 to a peripheral portion thereof, by a magnetic field which is generated from the magnetic poles to perform a recording operation, and thus no domain wall is formed in the magnetoresistive sensor 21. While, in the magnetic head which generates a peripheral magnetic field weaker than the anisotropy field of the magnetoresistive sensor, a strong magnetic field for defining the narrow track width is applied to only a central portion of the magnetoresistive sensor 21. Accordingly, the central portion of the sensor 21 is different in direction of magnetization from a peripheral portion of the sensor 21. Thus, a domain wall is formed in the magnetoresistive sensor 21. It has been confirmed that when a reproducing operation is performed in a state that such a domain wall is left in the magnetoresistive sensor 21, Barkhausen noise is increased. The experimental results show that it is preferable to make the peripheral magnetic field stronger than the anisotropy field of the magnetoresistive sensor 21 and weaker than the coercivity of a recording medium.

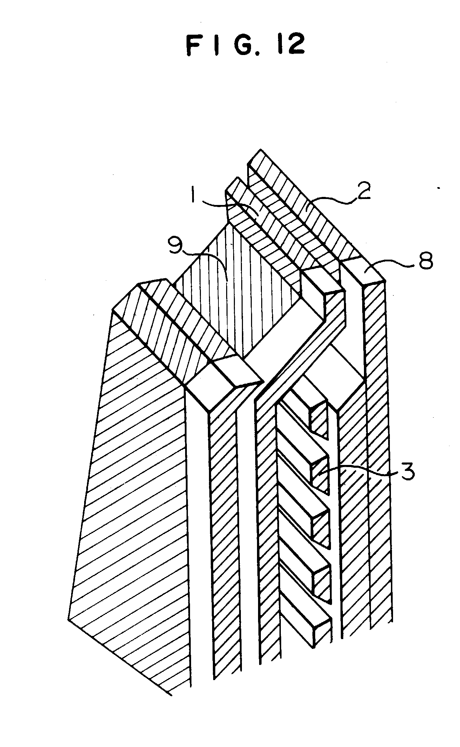

In the above, explanation has been made of the magnetic head, in which the magnetoresistive sensor 21 is disposed in the neighborhood of the magnetic poles 1 and 2. Alternatively, the magnetoresistive sensor 21 may be disposed in a central portion of the gap between the upper pole 1 and the lower pole 2, as shown in Fig. 8B. Fig. 8B corresponds to Fig. 12 of the prior U.S. application.

EMBODIMENT-3

A magnetic head mentioned in the EMBODIMENT-1 is combined with a magnetic recording medium having characteristics which will be explained below, to obtain magnetic disk storage capable of performing magnetic recording for a narrow track.

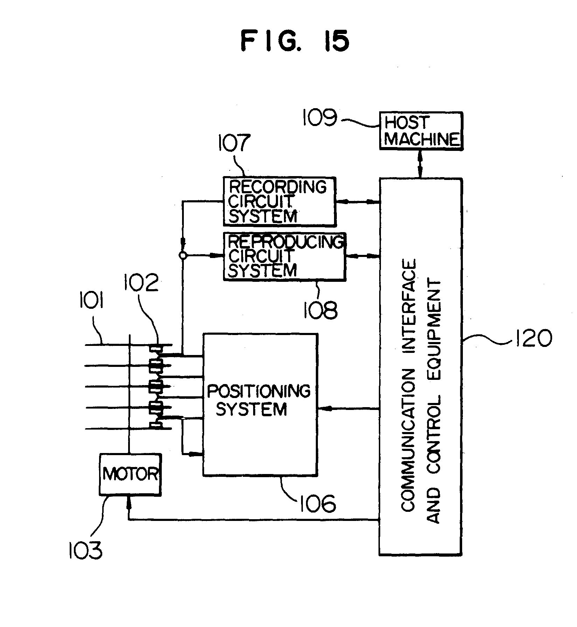

Fig. 15 shows the whole structure of the magnetic disk storage. Reference numeral 101 designates a magnetic recording medium, 102 a magnetic head, 103 a motor for rotating magnetic disks, 106 a positioning system for moving the magnetic head to a predetermined position on the medium, 107 a recording circuit system, 108 a reproducing circuit system, 109 a host machine and 120 communication interface and control equipment for interfacing communications between the whole control and the host machine. As the magnetic head 102, the magnetic head according to the EMBODIMENT-1 is used here.

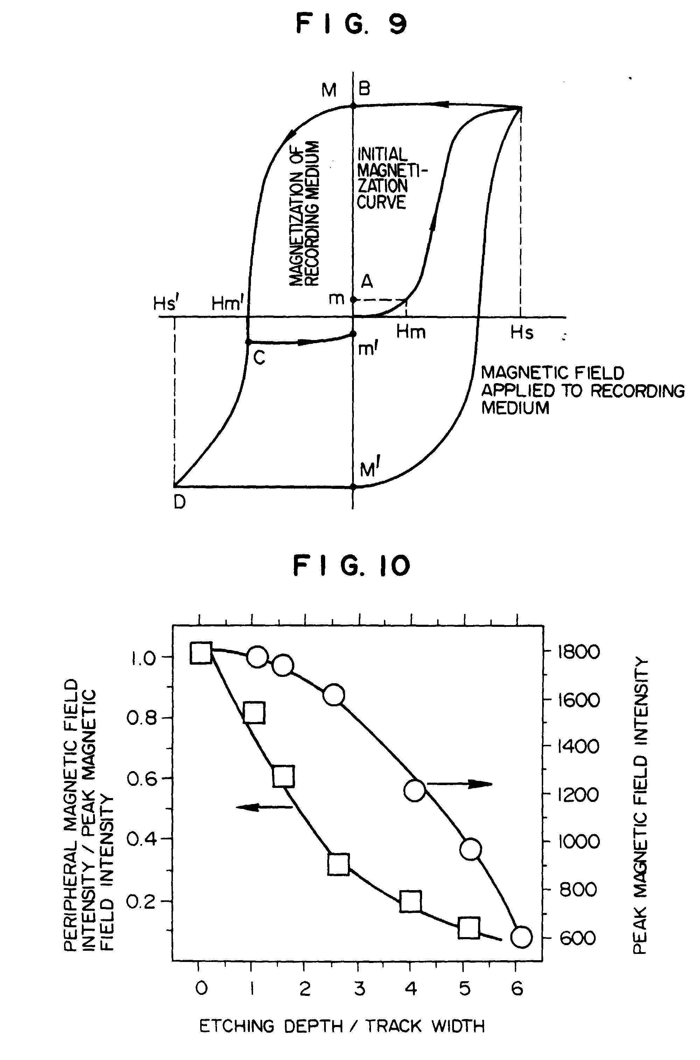

In a case where a magnetic head mentioned in the EMBODIMENT-1 performs a recording operation for a recording medium, when a ratio of the residual magnetization $\underline{m}$ in the recording medium caused by a peripheral magnetic field to the residual magnetization M in the recording medium caused by a main magnetic field for defining a narrow track width is less than 1/20, the magnetic recording for a narrow track can be made. Magnetic field distribution which is formed by the magnetic head and satisfies a relation m/M<1/20, is dependent on the hysteresis characteristics of the recording medium. Fig. 9 shows the above fact. In Fig. 9, reference characters M and M' designate residual magnetization, $\underline{m}$ is equal to M/20, and m' is equal to M'/20. Further, reference symbol $H_s$ designates an external magnetic field necessary for increasing the magnetization of the recording medium to saturation, $H_m$ a magnetic field necessary for magnetizing the recording medium to the value $\underline{m}$, and $H'_m$ an external magnetic field applied to the recording medium which has been magnetized to saturation, for magnetizing the recording medium to the value m'. When a magnetic field applied to the recording medium which has been subjected to the A.C. erase, is increased, the magnetization of the recording medium proceeds along an initial magnetization curve which starts from an origin A. At this time, if a main magnetic field formed by the magnetic head for defining a narrow track width is greater than $H_s$ and a peripheral magnetic field formed by the magnetic head is less than $H_m$, a recording track having the narrow track width is magnetized to the value M, and thus the magnetic recording for a narrow track can be made. Further, in a case where the D.C. erase has been performed for the recording medium, the magnetization of the recording medium starts from a point B, and proceeds in a direction opposite to the direction of initial magnetization curve. At this time, if a main magnetic field formed by the magnetic head for defining the narrow track width is greater than $H_s$ and a peripheral magnetic field formed by the magnetic head is less than $H'_m$, a relation m'<M'/20 is satisfied, and magnetic recording for a narrow track can be made. In a case where each of a ratio $H_m/H_s$ and a ratio $H'_m/H_s$ approaches one (1), the recording medium is an ideal one. In this case, when a main magnetic field formed by the magnetic head for defining the narrow track width is made slightly stronger than a peripheral magnetic field formed by the magnetic head, the magnetic recording for the narrow track can be made. In many of ordinary recording media, however, the ratio $H_m/H_s$ is about 1/3. As can be seen from the above, in a case where magnetic recording for a narrow track is made, the allowable range of ratio $H_m/H_s$ is determined by a main magnetic field formed by a magnetic head for defining a small track width and a peripheral magnetic field formed by the magnetic head.

The main magnetic field formed by the magnetic head for defining the narrow track width and the peripheral magnetic field formed by the magnetic head, were measured by the electron beam computerized tomography method using the Lorentz effect. Three kinds of magnetic heads were fabricated, and the first, second and third kinds of magnetic heads corresponded to a track width of 1 μm, a track width of 2 μm and a track width of 5 μm, respectively. The magnetic poles of each of the magnetic heads were made of permalloy having a saturated magnetic flux density of 1T. The magnetic field distribution formed by each magnetic head was measured for a plurality of values of etching depth for the magnetic poles. It was confirmed that the magnetic heads generates the same main magnetic field (namely, the same peak magnetic field) and the same peripheral magnetic field, when the magnetic heads are equal in a ratio of the etching depth for the magnetic poles to the track width, to one another. Accordingly, Fig. 10 shows a relation between the etching depth normalized by the track width and a ratio of the peripheral magnetic field to the peak magnetic field, and a relation between the normalized etching depth and the peak magnetic field. As is apparent from Fig. 10, the ratio of the peripheral magnetic field to the peak magnetic field is decreased as the etching depth is larger, and the peak magnetic field is abruptly reduced to a value less than the coercivity of a recording medium when the ratio of the peripheral magnetic field to the peak magnetic field becomes less than 1/5. Accordingly, when the peripheral magnetic field is made stronger than one-fifth the magnetic field for defining a narrow track width, and a magnetic head for forming such magnetic field distribution is combined with a recording medium having hysteresis characteristics that the ratio $H_m/H_s$ or $H'_m/H_s$ in Fig. 9 is greater than 1/5, magnetic disk storage is obtained which can perform magnetic recording for a narrow track.

EMBODIMENT-4

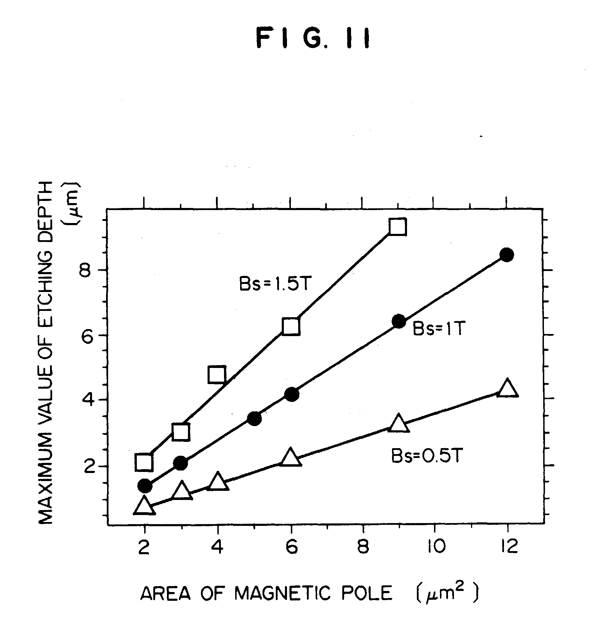

It has been already explained that when the etching depth in a magnetic head mentioned in the EMBODIMENT-1 for realizing a narrow track width is made greater than a predetermined value, the magnetic head cannot generate a strong magnetic field. Relations among the maximum value of etching depth (namely, maximum permissible limit of etching depth), the area of a magnetic pole, and the saturated magnetic flux density were investigated for a case where the magnetic head was combined with a magnetic recording medium having a ratio $H_m/H_s$ (or $H'_m/H_s$) greater than 1/5. Fig. 11 shows the results of investigation. In Fig. 11, the area of that portion of a magnetic pole which is exposed to an air bearing surface, is plotted as abscissa, and the maximum value of etching depth for the magnetic pole in a case where magnetic recording for a narrow track is possible, is plotted as ordinate. In the above investigation, three kinds of magnetic poles were used. The first kind of magnetic pole, the second kind of magnetic pole and the third kind of magnetic pole were made of a magnetic material having a saturated magnetic flux density of 0.5T, a magnetic material having a saturated magnetic flux density of 1T and a magnetic material having a saturated magnetic flux density of 1.5T, respectively. Fig. 11 shows that the maximum value $d_{max}$ of etching depth is substantially proportional to each of the area $\underline{s}$ of the magnetic pole and the saturated magnetic flux density $B_s$ of the magnetic pole, and is given by the following equation:

$$d_{max}[\mu m] = 0.7[1/(\mu m \bullet T)] \bullet s[\mu m^2] \bullet B_s[T] \qquad \text{(Eq. 1)}$$

A magnetic head satisfying the equation (1) was fabricated, and a recording medium mentioned in the EMBODIMENT-3 was combined with the magnetic head, to make possible magnetic recording for a narrow track.

EMBODIMENT-5

The magnetic field distribution mentioned in the EMBODIMENT-1 can be obtained without forming a difference in level at the tip of a magnetic pole, by a method other than a method mentioned in the EMBODIMENT-1 (that is, a method of eliminating the difference in level by filling a recess with an appropriate material). Fig. 12 shows a magnetic head of another kind according to the present invention. Referring to Fig. 12, a magnetic path is formed of a plurality of parts, which have an exciting coil in common. That is, the magnetic path is made of a plurality of magnetic materials. In Fig. 12, reference numeral 8 designates a magnetic material having a large saturated magnetic flux density for generating a strong magnetic field, and 9 a magnetic material having a small saturated magnetic flux density.
A magnetic head having the above structure can be fabricated by using the lift-off method in a manufacturing process. That is, magnetic poles on both sides are first formed by using a mask, a photo-resist layer is formed on the side magnetic poles, and then a magnetic pole for defining a narrow track width is formed between the side magnetic poles. Each of an upper magnetic pole and a lower magnetic pole is formed in the above manner. The side magnetic poles is made of the magnetic material 9 (for example, permalloy), and the central magnetic pole for defining the small track width is made of the magnetic material 8 greater in saturated magnetic flux density than the magnetic material 9. For example, Sendust (Fe-Si-Aℓ alloy) is used as the magnetic material 8. A magnetic head was fabricated by the above method, and the magnetic field distribution formed by the magnetic head was measured by the electron beam computerized tomography method using the Lorentz effect. It was confirmed that the magnetic field distribution formed by the magnetic head was substantially identical with the magnetic field distribution mentioned in the EMBODIMENT-1, and produced the same effect as the effect of the magnetic field distribution mentioned in the EMBODIMENT-1.
In the above explanation, the magnetic pole for defining a narrow track width and each side magnetic pole have an exciting coil in common. Alternatively, a coil for exciting the side magnetic poles may be formed independently of a coil for exciting the magnetic pole which defines the narrow track width.

EMBODIMENT-6

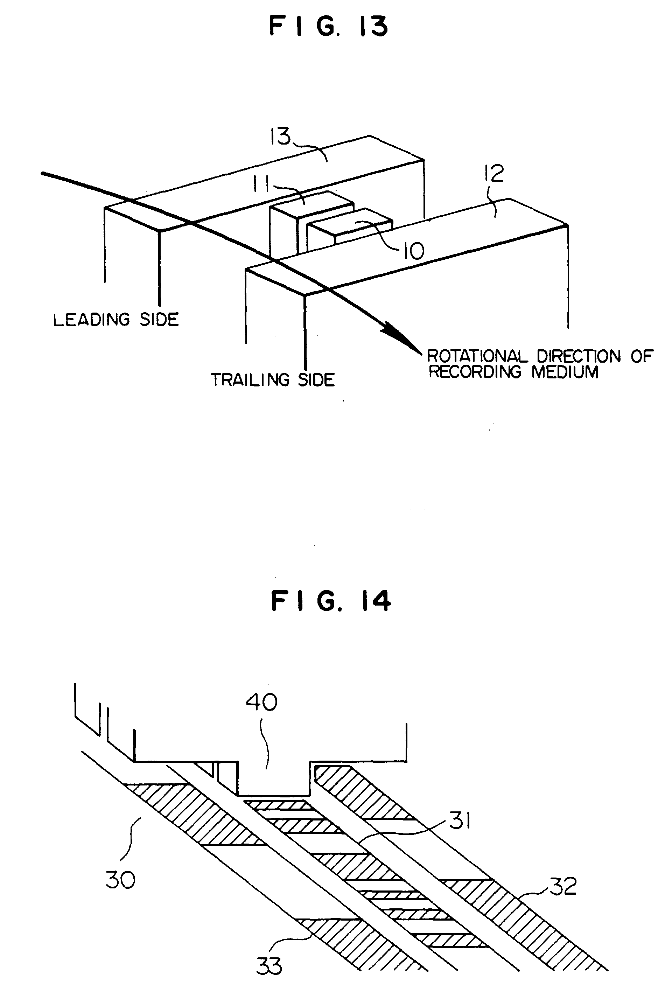

Fig. 13 shows the structure of tip portions of magnetic poles included in a magnetic head of a further kind according to the present invention. In Fig. 13, reference numerals 10 and 11 respectively designate upper and lower magnetic poles made of, for example, Sendust for forming a main magnetic field corresponding to a narrow track width, and 12 and 13 magnetic poles made of, for example, permalloy, for forming magnetic field around the main magnetic field. The magnetic poles 12 and 13 are disposed on both sides of the magnetic poles 10 and 11 viewed from the longitudinal recording direction, and have a width larger than the width of the magnetic poles 10 and 11. The magnetic poles 12 and 13 form a magnetic path. Each of the magnetic poles 10 and 11 for defining a narrow track width has a small cross section. Accordingly, when only the magnetic poles 10 and 11 are included in the magnetic head, the magnetic poles 10 and 11 cannot generate a strong magnetic field for magnetizing a recording medium and for performing a recording operation. Further, a magnetic field formed by the large-width magnetic poles 12 and 13 is weaker than the coercivity of the recording medium. However, when the magnetic poles 10 and 11 and the magnetic poles 12 and 13 are excited, a magnetic field formed by the magnetic poles 10 and 11 for defining the narrow track width is made stronger than the coercivity of the recording medium by a magnetic field which is formed by the magnetic poles 12 and 13, while keeping the distribution pattern of the former magnetic field. Accordingly, a recording operation for a narrow track can be performed.

When a magnetic field formed by the large-width magnetic poles 12 and 13 have no effect on the recording medium in a recording period, that is, the above magnetic field is preferably made weaker than two-thirds the coercivity of the recording medium, the magnetic poles 10 to 13 may be disposed so that the magnetic poles 10 and 11 are kept in contact with the magnetic poles 12 and 13, respectively. Further, it is not always required that the magnetic poles 10 and 11 for defining the small track width and the magnetic poles 12 and 13 for reinforcing a magnetic field generated by the magnetic poles 10 and 11, have an exciting coil in common, but the magnetic poles 10 and 11 and the magnetic poles 12 and 13 may have different exciting coils. In this case, an exciting current flowing through one of the above coils is not required to be equal to an exciting current flowing through the other coil. For example, an exciting current for the magnetic poles 12 and 13 which are used to reinforce a main magnetic field for defining a narrow track width, may be a D.C. current, or the magnetic poles 12 and 13 may be excited only at a necessary time. Further, the magnetic pole 12 on the trailing side may be omitted, that is, the magnetic field distribution formed by magnetic poles may have a steep slope on the trailing side.

EMBODIMENT-7

In a case where a reproducing operation is performed by a magnetic head which has a structure mentioned in the EMBODIMENT-1, those portions of magnetic poles which are exposed to an air bearing surface, are close to a recording medium, and thus can detect a recording signal having wavelength components in a wide wavelength range from a long wavelength to a short wavelength. While, those peripheral portions of the magnetic poles which are etched from the air bearing surface to a predetermined depth, can detect only a signal having a long wavelength. This fact can be explained from the spacing dependence of a reproduced output $E_{out}$, which is given by the following equation:

$$E_{out} = -54.6 \, d/\lambda \, (dB) \qquad\qquad (Eq. 2)$$

where $\lambda$ indicates a recording wavelength, and $\underline{d}$ the distance between the recording medium and the magnetic poles. By utilizing this relation among the reproduced output $E_{out}$, the recording wavelength $\lambda$ and the distance $\underline{d}$, it is possible to realize magnetic disk storage provided with a magnetic head which can perform a tracking operation without using special means. This magnetic disk storage will be explained below, with reference to Fig. 14.

Referring to Fig. 14, a sub-track 32 where a tracking signal having a long wavelength has been recorded, is formed on a recording medium 30 along a track 31 for recording information, that is, the subtrack 32 is formed on one side or both sides of the track 31. The tracking signal having the long wavelength is previously recorded at a time when a magnetic disk is initialized. When a magnetic head 40 capable of defining a narrow track width which has a structure mentioned in the EMBODIMENT-1, that is, a structure that a peripheral portion of each magnetic pole is etched to a predetermined depth, performs a reproducing operation for the magnetic disk, the tracking signal having the long wavelength is detected simultaneously with the detection of magnetically-recorded information. Thus, the magnetic head can perform the tracking operation.

Further, such a tracking operation can also be performed by a read/write magnetic head. That is, when the reproduction sensitivity of a read head has two or more levels and a sensitivity curve has three or more inflection points in the direction of track width, the read head can perform the tracking operation.

Further, the tracking signal may be written on the magnetic disk by the following method. Grooves 33 are first formed at a predetermined interval along the track 31 (that is, on one side or both sides of the track 31). The predetermined interval is made greater than or equal to a long wavelength which can be detected by a peripheral magnetic field formed by the magnetic head 40. Next, the recording medium 30 is magnetized in one direction parallel to the circumferential direction of the magnetic disk. Thus, a magnetic field leaks out to a space through the grooves 33, and is used as the tracking signal.

As has been explained in the foregoing, a main magnetic field generated by a magnetic head for performing a recording operation and for defining a track width, can have a narrow width in the direction of track width, without being weakened. Thus, according to the present invention, there is provided a magnetic head which defines a narrow track width and can perform a high-density recording/reproducing operation for a magnetic recording medium having high coercivity.

## Claims

1. A magnetic head (1, 2, 3, 4) combined with a recording medium (30) which stores information from the magnetic head, for performing one of a recording operation for recording magnetic information on the recording medium and a recording/reproducing operation for the recording medium, wherein the magnetic head generates a main and a peripheral magnetic field distribution along the direction of a recording track width, characterised in that the main magnetic field distribution corresponds to the width (7) of the recording track, the peripheral magnetic field distribution is spread beside or around the main magnetic field distribution, and the ratio of the maximum value of the main magnetic field distribution to the maximum value of the peripheral magnetic field distribution is approximately 2.

2. A magnetic head according to Claim 1, wherein the maximum value of a longitudinal magnetic field at a position spaced apart from the air bearing surface of the magnetic head for the recording medium, a distance corresponding to a spacing in a recording/reproducing period between the air bearing surface and the back of the recording layer of the recording medium, is stronger than the coercivity of the recording medium, and wherein a magnetic field formed beside or around a region having the maximum value is weaker than the coercivity of the recording medium.

3. A magnetic head according to Claim 1, wherein a magnetoresistive sensor (21) for performing a reproducing operation is further included in the magnetic head to form read/write magnetic head (1, 2, 5, 7, 21, 22), and wherein a peripheral magnetic field formed beside or around a main magnetic field corresponding to the width of the recording track is weaker than the coercivity of the recording medium and stronger than the anisotropy field of the magnetoresistive sensor.

4. A magnetic head according to Claim 1, wherein in order to form the combined magnetic field distribution, the tip of a magnetic pole included in the magnetic head is made up of a main portion which is exposed to the air bearing surface of the magnetic head for the recording medium to generate a magnetic field corresponding to a narrow recording track, and an auxiliary portion which is formed beside or around the main portion and spaced apart from the air bearing surface.

5. A magnetic head according to Claim 4, wherein the maximum of a spacing between the auxiliary portion and the air bearing surface is determined by a value proportional to the product of the surface area of the main portion exposed to the air bearing surface for generating the magnetic field corresponding to the narrow recording track, and the saturated magnetic flux density of a magnetic material used for making the magnetic pole.

6. A magnetic head according to Claim 5, wherein a proportional constant of 0.7 [1/($\mu$m•T)] is used for determining the maximum of the spacing between the auxiliary portion and the air bearing surface.

7. A magnetic head according to Claim 1, wherein the magnetic path of the magnetic head is made of a plurality of magnetic materials (8, 9) which are different in saturated magnetic flux density from each other.

8. A magnetic head according to Claim 1, wherein a magnetic path (10, 11) for generating a main magnetic field which has narrow distribution in the direction of the width of a recording track, and a magnetic path (12, 13) for generating a magnetic field which reinforces the main magnetic field, are formed independently of each other.

9. A method of fabricating a magnetic head according to claim 1, comprising the steps of:

   determining a difference in level for the surface of the magnetic poles (1, 2) in correspondence to the track width (7) of the magnetic head,
   processing the magnetic head so that the determined difference in level of the magnetic poles (1, 2) is formed at the tip of the magnetic head, and
   carrying out a post-treatment for the processed magnetic head to eliminate the difference in level at the tip of the magnetic head to obtain a flat magnetic head surface.

10. A method of fabricating a magnetic head as claimed in Claim 9, wherein, in the processing step, the tip of a magnetic pole included in the magnetic head is made up of a main portion which is exposed to the air bearing surface of the magnetic head for the recording medium to generate a magnetic field corresponding to a narrow recording track, and an auxiliary portion which is formed beside or around the main portion and spaced apart from the air bearing surface.

11. A method of fabricating a magnetic head as claimed in Claim 10, wherein, after the air bearing surface of the magnetic head has been polished, the tip of the magnetic pole is selectively etched or scraped out to form the main and auxiliary portions.

12. A method of fabricating a magnetic head as claimed in Claim 10, wherein the maximum of a spacing between the auxiliary portion and the air bearing surface is determined by a value proportional to the product of the surface area of the main portion exposed to the air bearing surface for generating the magnetic field corresponding to the narrow-recording track, and the saturated magnetic flux density of a magnetic material used for making the magnetic pole.

13. A method of fabricating a magnetic head as claimed in Claim 12, wherein a proportional constant of 0.7 [1/(μm•T)] is used for determining the maximum of the spacing between the auxiliary portion and the air bearing surface.

14. A method of fabricating a magnetic head as claimed in Claim 9, wherein, in the processing step, the magnetic path of the magnetic head is made of a plurality of magnetic materials (8, 9) which are different in saturated magnetic flux density from each other.

15. A method of fabricating a magnetic head as claimed in Claim 9, wherein, in the processing step, the magnetic head is irradiated with a charged particle beam so that the magnetic field distribution formed by the magnetic head is given by the combination of the main magnetic field distribution and the peripheral magnetic field distribution.

16. A method of fabricating a magnetic head as claimed in Claim 9, wherein, in the processing step, the magnetic head is processed through photolithographic techniques so that the magnetic field distribution formed by the magnetic head is given by the combination of the main magnetic field distribution and the peripheral magnetic field distribution.

17. A method of fabricating a magnetic head as claimed in Claim 9, wherein, in the post-treatment, a surface region which is formed at the tip of the magnetic pole portion of the magnetic head and spaced apart from the air bearing surface of the magnetic head for the recording medium, is filled with one selected from a group consisting of a material having resistivity higher than a magnetic film for forming the magnetic path of the magnetic head, an insulating material and a magnetic material lower in saturated magnetic flux density than a magnetic film for forming the magnetic path of the magnetic head, and the air bearing surface of the magnetic head is polished so as to form a flat surface, after the surface region has been filled with the selected material.

18. Magnetic disk storage including a magnetic recording medium (101), a magnetic head (102), a reproducing circuit system (108) for reading a signal from the magnetic head, a recording circuit system (107) for writing information in the recording medium through the magnetic head, a motor "(103) for moving the recording medium, a positioning system (106) for moving the magnetic head to a predetermined position on the recording medium, and communication interface and control equipment (120) for exchanging signals with a host machine (109), for communicating with the reproducing circuit system (108) and the recording circuit system (107), and for controlling each of the reproducing circuit system (108), the recording circuit system (107), the positioning system (106) and the motor (103), said magnetic disk storage comprising a magnetic head (102) according to claim 1.

19. Magnetic disk storage according to Claim 18, wherein the maximum value of a longitudinal magnetic field which is obtained by the magnetic head (102) at a position spaced apart from the air bearing surface of the magnetic head for the recording medium, a distance corresponding to a spacing in a recording/reproducing period between the air bearing surface and the back of the recording layer of the recording medium, is stronger than the coercivity of the recording medium, and wherein a magnetic field formed beside or around a region having the maximum value is weaker than the coercivity of the recording medium.

20. Magnetic disk storage according to Claim 18, wherein the recording medium (101) has hysteresis characteristics that residual magnetization $\underline{m}$ produced by an external magnetic field $H_m$ which is stronger than one-fifth an external magnetic field $H_s$ for generating magnetic saturation in the recording medium and is equal in polarity to the external magnetic field $H_s$, is less than one-twentieth residual magnetization M produced by the external magnetic field $H_s$.

21. Magnetic disk storage according to Claim 18, wherein a sub-track (32) where a tracking signal has been previously recorded, is formed on the recording medium (101, 30) so as to be disposed on at least one side of a track (31) for recording information, the tracking signal has a wavelength longer than a recording wavelength for the track, and the magnetic head (102, 40) performs a tracking operation for the recording medium on the basis of the long-wavelength tracking signal which is detected from the sub-track by the magnetic head.

22. Magnetic disk storage according to Claim 18, wherein grooves are formed in the recording medium (101) so as to be disposed on at least one side of a track for recording information, at an interval longer than a recording wavelength for the track, the recording medium is magnetized in one direction parallel to the circumferential direction of a magnetic disk having the magnetic medium, and the magnetic head (102) performs a tracking operation for the magnetic medium on the basis of a long-wavelength magnetic signal which is detected from the grooves by the magnetic head.

23. Magnetic disk storage according to Claim 18, wherein a read/write magnetic head is used as the magnetic head (102), the sensitivity curve of a read head in the direction of the width of a recording track has at least three inflection points, and the reproducing sensitivity of the read head has at least two levels.

24. Magnetic tape storage comprising a magnetic head according to Claim 1.

**Patentansprüche**

1. Magnetkopf (1, 2, 3, 4) mit einem Aufnahmemedium (30), das Informationen von dem Magnetkopf speichert, entweder zur Aufnahme magnetischer Information auf dem Aufnahmemedium oder für einen Aufnahme-/Wiedergabevorgang aus dem Aufnahmemedium, wobei der Magnetkopf in Richtung der Aufnahmespurbreite eine zentrale und eine periphere Magnetfeldverteilung erzeugt, dadurch gekennzeichnet, daß die zentrale Magnetfeldverteilung der Breite (7) der Aufnahmespur entspricht, die periphere Magnetfeldverteilung sich seitlich der oder um die zentrale Magnetfeldverteilung herum ausbreitet, und das Verhältnis der Maximalwerte der zentralen Magnetfeldverteilung zur peripheren Magnetfeldverteilung annähernd zwei beträgt.

2. Magnetkopf nach Anspruch 1, bei dem der Maximalwert einer longitudinalen Magnetfeldkomponente an einer Position beabstandet von der luftmitführenden Oberfläche des Magnetkopfes für das Aufnahmemedium größer ist als die Koerzitivkraft des Aufnahmemediums, wobei der Abstand dem Zwischenraum zwischen der luftmitführenden Oberfläche und der Rückseite der Aufnahmeschicht des Aufnahmemediums während einer Aufnahme/ Wiedergabezeitspanne entspricht, und bei dem das seitlich des oder um den Bereich mit diesem Maximalwert ausgebildete Magnetfeld schwächer ist als die Koerzitivkraft des Aufnahmemediums.

3. Magnetkopf nach Anspruch 1, bei dem ein Feldplattensensor (21) zur Ausführung des Wiedergabevorgangs in dem Magnetkopf enthalten ist, der einen Lese-/Schreibe-Magnetkopf (1, 2, 5, 7, 21, 22) bildet, und bei dem seitlich des oder um das zentrale, der Breite der Aufnahmespur entsprechende Magnetfeld herum ein peripheres Magnetfeld ausgebildet ist, das schwächer ist als die Koerzitivkraft des Aufnahmemediums und stärker als das Anisotropiefeld des Feldplattensensors.

4. Magnetkopf nach Anspruch 1, bei dem zur Ausbildung der kombinierten Magnetfeldverteilung die Spitze des im Magnetkopf enthaltenen Magnetpols aus einem zentralen Abschnitt gefertigt ist, der der luftmitführenden Oberfläche des Magnetkopfes für das Aufnahmemedium ausgesetzt ist und ein einer schmalen Aufnahmespur entsprechendes Magnetfeld erzeugt, sowie aus einem Nebenabschnitt, der neben oder um den zentralen Abschnitt herum ausgebildet ist und zur luftmitführenden Oberfläche beabstandet ist.

5. Magnetkopf nach Anspruch 4, bei dem der Maximalabstand zwischen dem Nebenabschnitt und der luftmitführenden Oberfläche durch einen Wert festgelegt ist, der proportional ist zum Produkt der Oberfläche des der luftmitführenden Oberfläche ausgesetzten zentralen Abschnitts zur Erzeugung eines der schmalen Aufnahmespur entsprechenden Magnetfeldes und Sättigungsmagnetflußdichte des zur Herstellung des Magnetpols verwendeten magnetischen Materials.

6. Magnetkopf nach Anspruch 5, bei dem eine Proportionalitätskonstante von 0,7 [1/($\mu$m * T)] zur Bestimmung des Maximalabstands zwischen dem Nebenabschnitt und der luftmitführenden Oberfläche verwendet wird.

7.  Magnetkopf nach Anspruch 1, bei dem die Magnetstrecke des Magnetkopfes aus mehreren magnetischen Materialien (8, 9) hergestellt ist, die sich in ihrer Sättigungsmagnetflußdichte voneinander unterscheiden.

8.  Magnetkopf nach Anspruch 1, bei dem eine Magnetstrecke (10, 11) zur Erzeugung eines zentralen Magnetfelds mit schmaler Verteilung in Richtung der Breite der Aufnahmespur und eine Magnetstrecke (12, 13) zur Erzeugung eines Magnetfeldes, das das zentrale Magnetfeld verstärkt, unabhängig voneinander ausgebildet sind.

9.  Verfahren zur Herstellung eines Magnetkopfs nach Anspruch 1, bei dem

    abhängig von der Spurenbreite (7) des Magnetkopfes ein Unterschied bezüglich der Höhe der Oberflächen der Magnetpole (1, 2) festgelegt wird,
    der Magnetkopf derart bearbeitet wird, daß der festgelegte Höhenunterschied der Magnetpole (1, 2) an der Spitze des Magnetkopfes ausgebildet wird, und bei dem
    eine Nachbehandlung des derart behandelten Magnetkopfes erfolgt, um den Höhenunterschied an der Spitze des Magnetkopfes zu eliminieren und eine flache Magnetkopfoberfläche zu erhalten.

10. Verfahren zur Herstellung eines Magnetkopfs nach Anspruch 9, bei dem bei der Bearbeitung die im Magnetkopf enthaltene Spitze des Magnetpols als zentraler Abschnitt ausgebildet wird, der der luftmitführenden Oberfläche des Magnetkopfes für das Aufnahmemedium ausgesetzt ist, um ein einer schmalen Aufnahmespur entsprechendes Magnetfeld zu erzeugen, sowie als ein Nebenabschnitt, der neben oder um den zentralen Abschnitt herum gebildet und von der luftmitführenden Oberfläche beabstandet ist.

11. Verfahren zur Herstellung eines Magnetkopfes nach Anspruch 10, bei dem die luftmitführende Oberfläche des Magnetkopfes poliert und anschließend die Spitze des Magnetpoles selektiv geätzt oder ausgeschabt wird, um den zentralen und den Nebenabschnitt zu bilden.

12. Verfahren zur Herstellung eines Magnetkopfes nach Anspruch 10, bei dem der Maximalabstand zwischen dem Nebenabschnitt und der luftmitführenden Oberfläche durch einen Wert festgelegt wird, der proportional zum Produkt der Oberfläche des zentralen Abschnitts, der zur Erzeugung eines der schmalen Aufnahmespur entsprechenden Magnetfelds der luftmitführenden Oberfläche ausgesetzt ist, und der Sättigungsmagnetflußdichte des zur Herstellung des Magnetpols verwendeten magnetischen Materials.

13. Verfahren zur Herstellung eines Magnetkopfes nach Anspruch 12, bei dem eine Proportionalitätskonstante von 0,7 [1/($\mu$m * T)] zur Bestimmung des Maximalabstandes zwischen dem Nebenabschnitt und der luftmitführenden Oberfläche verwendet wird.

14. Verfahren zur Herstellung eines Magnetkopfes nach Anspruch 9, bei dem während der Bearbeitung die Magnetstrecke des Magnetkopfes aus mehreren magnetischen Materialien (8, 9) gefertigt wird, die sich in der Sättigungsmagnetflußdichte voneinander unterscheiden.

15. Verfahren zur Herstellung eines Magnetkopfes nach Anspruch 9, bei dem während der Bearbeitung der Magnetkopf mit einem geladenen Teilchenstrahl bestrahlt wird, so daß die vom Magnetkopf gebildete Magnetfeldverteilung durch die Kombination der zentralen Magnetfeldverteilung mit der peripheren Magnetfeldverteilung gegeben ist.

16. Verfahren zur Herstellung eines Magnetkopfs nach Anspruch 9, bei dem während der Bearbeitung der Magnetkopf mittels photolitographischer Techniken derart behandelt wird, daß die durch den Magnetkopf gebildete Magnetfeldverteilung durch die Kombination der zentralen Magnetfeldverteilung mit der peripheren Magnetfeldverteilung gegeben ist.

17. Verfahren zur Herstellung eines Magnetkopfs nach Anspruch 9, bei dem bei der Nachbearbeitung ein Oberflächenbereich, der an der Spitze des Magnetpolabschnitts des Magnetkopfs ausgebildet und von der luftmitführenden Oberfläche des Magnetkopfs für das Aufnahmemedium beabstandet ist, mit einem Material ausgefüllt wird, das aus einer Gruppe von Materialien ausgewählt wird, wobei diese Gruppe ein Material umfaßt von höherem Widerstand als eine magnetische Schicht zur Bildung der Magnetstrecke des Magnetkopfes, sowie ein isolierendes Material und ein magnetisches Material von geringerer Sättigungsmagnetflußdichte als der magnetischen Schicht zur Bildung der Magnetstrecke des Magnetkopfes, und bei dem die luftmitführende Oberfläche des Magnetkopfes derart poliert wird, daß nach der Füllung des Oberflächenbereichs mit dem ausgewählten Material eine flache Oberfläche entsteht.

18. Magnetischer Plattenspeicher mit einem magnetischen Aufnahmemedium (101), einem Magnetkopf (102), einem Wiedergabeschaltkreis (108) zum Lesen eines Signals durch den Magnetkopf, einem Aufnahmeschaltkreis (107) zum Schreiben von Informationen auf das Aufnahmemedium mittels des Magnetkopfes, einem Motor (103) zum Bewegen des Aufnahmemediums, einem Positioniersystem (106), das den Magnetkopf an eine vorbestimmte Position auf dem Aufnahmemedium bewegt, und mit einer Kommunikationsschnittstelle und einer Steuerung (120) zum Austausch von Signalen mit dem Hauptrechner (109), zur Kommunikation mit dem Wiedergabeschaltkreis (108) und dem Aufnahmeschaltkreis (107) und zur Steuerung des Wiedergabeschaltkreises (108), des Aufnahmeschaltkreises (107), des Positioniersystems (106) und des Motors (103), wobei der magnetische Plattenspeicher einen Magnetkopf (102) nach Anspruch 1 aufweist.

19. Magnetischer Plattenspeicher nach Anspruch 18, bei dem der Maximalwert der longitudinalen Magnetfeldkomponente des Magnetkopfes (102) an einer Position beabstandet zur luftmitführenden Oberfläche des Magnetkopfes für das Aufnahmemedium größer ist als die Koerzitivkraft des Aufnahmemediums, wobei die Entfernung dem Abstand zwischen der luftmitführenden Oberfläche und der Rückseite der Aufnahmeschicht des Aufnahmemediums während einer Aufnahme-/Wiedergabezeitspanne entspricht, und bei dem das neben oder um den Bereich mit dem Maximalwert gebildete Magnetfeld schwächer ist als die Koerzitivkraft des Aufnahmemediums.

20. Magnetischer Plattenspeicher nach Anspruch 18, bei dem das Aufnahmemedium (101) eine Hysterese-Eigenschaft aufweist, derart daß die Restmagnetisierung $\underline{m}$, die durch ein äußeres Magnetfeld $H_m$ erzeugt wird, das stärker ist als ein Fünftel eines äußeren Magnetfeldes $H_s$ zur Erzeugung magnetischer Sättigung im Aufnahmemedium, und das gleiche Polarität wie das äußere Magnetfeld $H_s$ aufweist, geringer ist als ein Zwanzigstel der Restmagnetisierung M wie sie durch das äußere Magnetfeld $H_s$ erzeugt wird.

21. Magnetischer Plattenspeicher nach Anspruch 18, bei dem eine Nebenspur (32), auf der ein Spursignal vorher aufgenommen wurde, auf dem Aufnahmemedium (101, 30) ausgebildet wird und auf zumindest einer Seite der Spur (31) zur Aufnahme von Information angeordnet ist, wobei das Spursignal eine größere Wellenlänge als eine Aufnahmenwellenlänge für die Spur besitzt, und wobei der Magnetkopf (102, 40) auf der Grundlage des langwelligen Spurensignals, das aus der Nebenspur durch den Magnetkopf ermittelt wird, einen Spurvorgang auf dem Aufnahmemedium ausführt.

22. Magnetischer Plattenspeicher nach Anspruch 18, bei dem Rillen im Aufnahmemedium (101) ausgebildet und auf zumindest einer Seite einer Spur zur Informationsaufnahme in einem Intervall größer als eine Aufnahmenwellenlänge für die Spur angeordnet sind, das Aufnahmemedium in einer Richtung parallel zur Umfangsrichtung der magnetischen Platte mit dem magnetischen Medium magnetisiert ist, und der Magnetkopf (102) auf der Grundlage eines mittels des Magnetkopfes aus den Rillen ermittelten magnetischen Signals großer Wellenlänge ein Spurvorgang auf dem magnetischen Medium ausführt.

23. Magnetischer Plattenspeicher nach Anspruch 18, bei dem ein Lese-/Schreibmagnetkopf als Magnetkopf (102) verwendet wird, wobei die Empfindlichkeitskurve des Lesekopfes in Richtung der Breite einer Aufnahmespur zumindest drei Wendepunkte aufweist und die Wiedergabeempfindlichkeit des Lesekopfes zumindest zwei Pegel besitzt.

24. Magnetischer Bandspeicher mit einem Magnetkopf nach Anspruch 1.

**Revendications**

1. Tête magnétique (1, 2, 3, 4) combinée à un support d'enregistrement (30) qui mémorise des informations provenant de la tête magnétique, pour effectuer une opération parmi une opération d'enregistrement destinée à enregistrer des informations magnétiques sur le support d'enregistrement et une opération d'enregistrement/reproduction pour le support d'enregistrement, dans laquelle la tête magnétique génère une répartition de champs magnétiques principal et périphérique le long de la direction d'une largeur de piste d'enregistrement, caractérisée en ce que la répartition de champ magnétique principal correspond à la largeur (7) de la piste d'enregistrement, la répartition de champ magnétique périphérique est étalée à côté ou autour de la répartition de champ magnétique principal, et le rapport entre la valeur maximale de la répartition de champ magnétique principal et la valeur maximale de la répartition de champ magnétique périphérique est approximativement égal à 2.

2. Tête magnétique selon la revendication 1, dans laquelle la valeur maximale d'un champ magnétique longitudinal à une position espacée de la surface sur coussin d'air de la tête magnétique pour le support d'enregistrement, une distance correspondant à l'espacement dans une période d'enregistrement/reproduction entre la surface sur coussin d'air et la partie arrière de la couche d'enregistrement du support d'enregistrement, est plus grande que la coercivité du support d'enregistrement, et dans laquelle un champ magnétique formé à côté ou autour d'une région ayant la valeur maximale est plus faible que la coercivité du support d'enregistrement.

3. Tête magnétique selon la revendication 1, dans laquelle un capteur magnétorésistif (21) destiné à effectuer une opération de reproduction est de plus inclus dans la tête magnétique pour former une tête magnétique de lecture/écriture (1, 2, 5, 7, 21, 22), et dans laquelle un champ magnétique périphérique formé à côté ou autour d'un champ magnétique principal correspondant à la largeur de la piste d'enregistrement est plus faible que la coercivité du support d'enregistrement et plus fort que le champ anisotrope du capteur magnétorésistif.

4. Tête magnétique selon la revendication 1, dans laquelle afin de former la répartition de champs magnétiques combinés, la pointe à pôle magnétique incluse dans la tête magnétique est constituée d'une partie principale qui est exposée à la surface sur coussin d'air de la tête magnétique pour le support d'enregistrement afin de générer un champ magnétique correspondant à une piste d'enregistrement étroite, et d'une partie auxiliaire qui est formée à côté ou autour de la partie principale et espacée de la surface sur coussin d'air.

5. Tête magnétique selon la revendication 4, dans laquelle la valeur maximale d'un espacement entre la partie auxiliaire et la surface sur coussin d'air est déterminée par une valeur proportionnelle au produit de la surface superficielle de la partie principale exposée à la surface sur coussin d'air pour générer le champ magnétique correspondant à la piste d'enregistrement étroite, et de la densité saturée de flux magnétique d'un matériau magnétique utilisé pour fabriquer le pôle magnétique.

6. Tête magnétique selon la revendication 5, dans laquelle une constante proportionnelle de 0,7 [1/(µm.T)] est utilisée pour déterminer la valeur maximale de l'espacement entre la partie auxiliaire et la surface sur coussin d'air.

7. Tête magnétique selon la revendication 1, dans laquelle le chemin magnétique de la tête magnétique est constitué d'une pluralité de matériaux magnétiques (8,9) qui sont différents en ce qui concerne la densité saturée de flux magnétique les uns des autres.

8. Tête magnétique selon la revendication 1, dans laquelle un chemin magnétique (10, 11) pour générer un champ magnétique principal qui a une répartition étroite dans la direction de la largeur d'une piste d'enregistrement, et un chemin magnétique (12, 13) pour générer un champ magnétique qui renforce le champ magnétique principal, sont formés indépendamment l'un de l'autre.

9. Procédé de fabrication d'une tête magnétique selon la revendication 1, comportant les étapes consistant à :

   déterminer une différence de niveau pour la surface des pôles magnétiques (1, 2) en correspondance avec la largeur de piste (7) de la tête magnétique,
   traiter la tête magnétique de sorte que la différence déterminée de niveau des pôles magnétiques (1, 2) soit formée à la pointe de la tête magnétique, et
   effectuer un poste-traitement pour la tête magnétique traitée afin d'éliminer la différence de niveau à la pointe de la tête magnétique pour obtenir une surface plate de tête magnétique.

10. Procédé de fabrication d'une tête magnétique selon la revendication 9, dans lequel, lors de l'étape de traitement, la pointe d'un pôle magnétique inclus dans la tête magnétique est constituée d'une partie principale qui est exposée à la surface sur coussin d'aire de la tête magnétique pour le support d'enregistrement afin de générer un champ magnétique correspondant à une piste d'enregistrement étroite, et d'une partie auxiliaire qui est formée à côté ou autour de la partie principale et espacée de la surface sur coussin d'air.

11. Procédé de fabrication d'une tête magnétique selon la revendication 10, dans lequel, après que la surface sur coussin d'air de la tête magnétique ait été polie, la pointe du pôle magnétique est gravée ou grattée de manière sélective pour former les parties principale et auxiliaire.

12. Procédé de fabrication d'une tête magnétique selon la revendication 10, dans lequel la valeur maximale d'un espacement entre la partie auxiliaire et la surface sur coussin d'air est déterminée par une valeur proportionnelle au produit de la surface superficielle de la partie principale exposée à la surface sur coussin d'air pour générer le

**EP 0 517 137 B1**

champ magnétique correspondant à la piste d'enregistrement étroite, et de la densité saturée de flux magnétique d'un matériau magnétique utilisé pour fabriquer le pôle magnétique.

13. Procédé de fabrication d'une tête magnétique selon la revendication 12, dans lequel une constante proportionnelle de 0,7 [1/(µm.T)] est utilisée pour déterminer la valeur maximale de l'espacement entre la partie auxiliaire et la surface sur coussin d'air.

14. Procédé de fabrication d'une tête magnétique selon la revendication 9, dans lequel, lors de l'étape de traitement, le chemin magnétique de la tête magnétique est constitué d'une pluralité de matériaux magnétiques (8, 9) qui sont différents en ce qui concerne la densité saturée de flux magnétique les uns des autres.

15. Procédé de fabrication d'une tête magnétique selon la revendication 9, dans lequel, lors de l'étape de traitement, la tête magnétique est irradiée par un faisceau de particules chargées de sorte que la répartition de champ magnétique formée par la tête magnétique est donnée par la combinaison de la répartition de champ magnétique principal et de la répartition de champ magnétique périphérique.

16. Procédé de fabrication d'une tête magnétique selon la revendication 9, dans lequel, lors de l'étape de traitement, la tête magnétique est traitée par l'intermédiaire de techniques photolithographiques, de sorte que la répartition de champ magnétique formée par la tête magnétique est donnée par la combinaison de la répartition de champ magnétique principal et de la répartition de champ magnétique périphérique.

17. Procédé de fabrication d'une tête magnétique selon la revendication 9, dans lequel, lors du poste-traitement, une région en surface qui est formée à la pointe de la partie de pôle magnétique de la tête magnétique et espacée de la surface sur coussin d'air de la tête magnétique pour le support d'enregistrement, est remplie d'un matériau sélectionné parmi un groupe constitué d'un matériau ayant une résistivité supérieure à un film magnétique destiné à former le chemin magnétique de la tête magnétique, un matériau isolant et un matériau magnétique ayant une densité saturée de flux magnétique inférieure à celle d'un film magnétique destinée à former le chemin magnétique de la tête magnétique, et la surface sur coussin d'air de la tête magnétique est polie de manière à former une surface plate, après que la région en surface ait été remplie à l'aide du matériau sélectionné.

18. Mémoire à disque magnétique comportant un support d'enregistrement magnétique (101), une tête magnétique (102), un système de circuit de reproduction (108) pour lire un signal depuis la tête magnétique, un système de circuit d'enregistrement (107) pour écrire des informations dans le support d'enregistrement par l'intermédiaire de la tête magnétique, un moteur (103) pour déplacer le support d'enregistrement, un système de positionnement (106) pour déplacer la tête magnétique jusqu'à une position prédéterminée sur le support d'enregistrement, et un équipement de commande et d'interface de communication (120) pour échanger des signaux avec une machine centrale (109), afin de communiquer avec le système de circuit de reproduction (108) et le système de circuit d'enregistrement (107), et pour commander chacun des systèmes de circuit de reproduction (108), de circuit d'enregistrement (107), et de positionnement (106) et le moteur (103), ladite mémoire à disque magnétique comportant une tête magnétique (102) selon la revendication 1.

19. Mémoire à disque magnétique selon la revendication 18, dans laquelle la valeur maximale d'un champ magnétique longitudinal qui est obtenue par la tête magnétique (102) à une position espacée de la surface sur coussin d'air de la tête magnétique pour le support d'enregistrement, une distance correspondant à un espacement dans une période d'enregistrement/reproduction entre la surface sur coussin d'air et la partie arrière de la couche d'enregistrement du support d'enregistrement, est supérieure à la coercivité du support d'enregistrement, et dans laquelle un champ magnétique formé à côté ou autour de la région ayant la valeur maximale est plus faible que la coercivité du support d'enregistrement.

20. Mémoire à disque magnétique selon la revendication 18, dans laquelle le support d'enregistrement (101) a des caractéristiques d'hystérisis telles que la magnétisation résiduelle $m$ produite par un champ magnétique externe $H_m$ qui est plus fort qu'un cinquième d'un champ magnétique externe $H_s$ pour générer une saturation magnétique dans le support d'enregistrement et qui est égal en polarité au champ magnétique externe $H_s$, est inférieure à un vingtième de la magnétisation résiduelle M produite par le champ magnétique externe $H_s$.

21. Mémoire à disque magnétique selon la revendication 18, dans laquelle une sous-piste (32) où un signal des suivis de piste a été enregistré au préalable, est formée sur le support d'enregistrement (101, 30) de manière à être disposée sur au moins un côté d'une piste (31) pour enregistrer des informations, le signal de suivi de piste a une longueur d'onde plus longue qu'une longueur d'onde d'enregistrement pour la piste, et la tête magnétique (102, 40) effectue une opération de suivi de piste pour le support d'enregistrement sur la base du signal de suivi de piste ayant une longueur d'onde longue qui est détecté depuis la sous-piste par la tête magnétique.

22. Mémoire à disque magnétique selon la revendication 18, dans laquelle des gorges sont formées dans le support d'enregistrement (101) de manière à être disposées sur au moins un côté d'une piste pour enregistrer les informations, à un intervalle plus long qu'une longueur d'onde d'enregistrement pour la piste, le support d'enregistrement est magnétisé dans une direction parallèle à la direction circonférentielle d'un disque magnétique ayant le support magnétique, et la tête magnétique (102) effectue une opération de suivi de piste pour le support magnétique sur la base d'un signal magnétique ayant une longueur d'onde longue qui est détecté depuis les gorges par la tête magnétique.

23. Mémoire à disque magnétique selon la revendication 18, dans laquelle une tête magnétique de lecture/écriture est utilisée en tant que tête magnétique (102), la courbe de sensibilité d'une tête de lecture dans la direction de la largeur d'une piste d'enregistrement a au moins trois points d'inflexion, et la sensibilité de reproduction de la tête de lecture a au moins deux niveaux.

24. Mémoire à bande magnétique comportant une tête magnétique selon la revendication 1.

# FIG. I

# F I G. 2

# F I G. 3

# FIG. 4A

(SHARP MAGNETIC
FIELD DISTRIBUTION)

$\Delta Hx$

DISTRIBUTION OF MAGNETIC FIELD COMPONENT Hx
(SPATIAL DISTRIBUTION WITH RESPECT TO THE COMPO-
NENT OF MAGNETIC FIELD IN LONGITUDINAL
RECORDING DIRECTION)

y

x

Hx

Hy

EDGE PORTION

RECORDING STATE ON
RECORDING MEDIUM

# FIG. 4B

(MAGNETIC FIELD DISTRIBUTION
ACCORDING TO PRESENT INVENTION)

$\Delta Hx$

DISTRIBUTION OF MAGNETIC FIELD COMPONENT Hx
(SPATIAL DISTRIBUTION WITH RESPECT TO THE COMPONENT
OF MAGNETIC FIELD IN LONGITUDINAL RECORDING
DIRECTION)

EDGE PORTION

RECORDING STATE ON
RECORDING MEDIUM

EP 0 517 137 B1

# FIG. 5

# FIG. 6

# F I G. 7

LONGITUDINAL MAGNETIC FIELD INTENSITY (Oe)

2000

1000

(a) UNETCHED

COERCIVITY OF
RECORDING
MEDIUM USED

(b) ETCHING DEPTH
OF 1.5μm

−10          0          −10

DISTANCE FROM CENTER OF MAGNETIC POLE
IN DIRECTION OF TRACK WIDTH (μm)

# F I G. 8A

# F I G. 8B

# F I G. 9

# F I G. 10

# FIG. 11

# F I G. 12

# F I G. 13

LEADING SIDE

TRAILING SIDE

ROTATIONAL DIRECTION OF
RECORDING MEDIUM

# F I G. 14

# FIG. 15